# EUROPEAN PATENT APPLICATION

(11) **EP 2 317 157 A2**
(43) Date of publication of application: **04.05.2011**
(21) Application number: 10188187.8
(22) Date of filing: 20.10.2010
(51) Int. Cl.: F16B 7/18

(54) **Union element for uniting perpendicularly two metallic profiles and system wherein this element is used**

(30) Priority: 20.10.2009 ES 200930873
(71) Applicant: Orobitg Petit, Francesc, 25200 Cervera (ES); Orobitg Petit, Eulàlia, AD500 Andorra La Vella (AD)
(72) Inventor: Orobitg Petit, Francesc, 25200, CERVERA (ES)
(74) Representative: Ponti Sales, Adelaida

(57) **Abstract**

Connection element (1) to perpendicularly join two metal profiles (2a,2b) provided with sliding and fastening grooves (2c,2d), which comprises fastening means (3a,3b) to said profiles (2a,2b) on two surfaces perpendicular to each other (1a,1b) of said element (1), and which comprises one circular groove (4) on one side of the piece, the centre of said circular groove (4) pertaining to the axis of intersection (P) of said surfaces which are perpendicular to each other (1a,1b), so that the connection element (1) guarantees, by means of the circular groove (4) on the side (1c), the continuity between the sliding and fastening grooves (2c,2d) of the profiles to be fastened (2a,2b).

## Description

The present invention relates to a connection element intended to perpendicularly join two metal profiles, which permits the possibility of fastening elements to sais profiles to be broadened. It also relates to the system used in said element.

### BACKGROUND OF THE INVENTION

Connection elements intended to perpendicularly join two metal profiles are known that are provided with sliding and fastening grooves, which comprise fastening means to said profiles by means of two surfaces which are perpendicular to each other of the same element.

In general, these pieces are used to fasten two profiles to each other so that they remain perpendicular to each other.

Some of these connection elements are devised to join the aforementioned profiles at any part thereof, and others are devised to perform said connections at the ends of the profiles.

Examples of these last devices are those disclosed in EP 0152987, JP2007092764, WO03058018, US 4012153 OR US 3901612, amongst many others.

In all of these documents, the function of the object described is to connect the metal profiles, wherein these are generally provided with rails or grooves for the fastening of other elements, for example in an assembly line.

However, in these devices the connection area lacks other functions, for example that of fastening objects.

Against this deficiency, the applicant considers it necessary to propose a connection element that does not present the limitations of the state of the art, broadening the fastening possibilities of the profiles system wherein it is incorporated.

### DESCRIPTION OF THE INVENTION

To do this, the present invention proposes a connection element intended to perpendicularly join two metal profiles provided with sliding and fastening grooves, which comprises means for fastening to said profiles on two surfaces of said profile that are perpendicular to each other, which is characterised by the fact that it comprises at least one circular groove on one side of the piece perpendicular to said surfaces which are perpendicular to each other, the centre of said circular groove pertaining to the axis of intersection P of said surfaces which are perpendicular to each other, so that the connection element guarantees, by means of the circular groove on the side, the continuity between the sliding and fastening grooves of the two profiles to be fastened.

Therefore, the limitations of the state of the art are resolved with this connection element, given that it permits
- It lends continuity to the grooves of the profiles for the movement of objects fastened thereto from one profile to another.
- It has a groove in the connection area for fastening objects.

Preferably, the circular groove has a section which becomes wider in the direction of the entrance, so that the edges of the groove consist of two fastening and retaining flaps, i.e. that it has the habitual fastening section used in these types of profiles.

More preferably, the connection element of the invention comprises another groove on the side opposite to the one which contains the first groove, so that it can guarantee the continuity of the grooves of both sides of the profiles to be joined.

Advantageously, the edges and internal surfaces of said circular grooves closest to the axis of intersection P pertain to both pieces, which can be assembled with a third piece which makes up of the rest of the element.

This characteristic is particularly advantageous, given that it permits the pieces to be manufactured separately for the subsequent assembly thereof, using reusable moulds and eliminating the need to use lost mould techniques.

More advantageously, the element of the invention comprises means for connecting said pieces to said third piece, to be able to assemble and ensure that the three pieces connect to each other to configure the connection element.

Preferably, the connection means comprises two mutually threadable screws with longitudinal shafts parallel to said axis of intersection P, three aligned orifices being provided in said three pieces, arranged between both shafts when the array is assembled.

Finally, the third piece, which constitutes the main part of the element of the invention, is formed by two plates which constitute said perpendicular surfaces, joined at the axis of intersection and by a surface of revolution which connects to said plates, leaving the centres of the plates free for the disposition of both orifices, intended to allow fastening screws to pass through to said profiles. Preferably, these plates can be provided, on both sides of said orifices, with holding projections or additional fastening orifices, intended to prevent the rotation between the connection element and the joined element.

Likewise, the invention relates to a connection system for metal profiles provided with sliding and fastening grooves, wherein connection elements are used according to any of the possible combinations, being able to connect the piece to itself creating different connection compounds, thus providing a versatile system with broadened fastening capacities.

### BRIEF DESCRIPTION OF THE DRAWINGS

For improved understanding of that set forth, drawings are accompanied wherein, schematically and solely in a non-limitative example, a practical case of embodiment is represented:
figures 1 to 3 are two elevational views and one plan view of the element of the invention.
figure 4 is a perspective and exploded view of the element of the invention.
figure 5 is a view wherein a connection between two profiles, made by means of the element of the invention, is observed.
figure 6 is a view wherein the different possible combinations of the piece with itself is observed.

### DESCRIPTION OF A PREFERRED EMBODIMENT

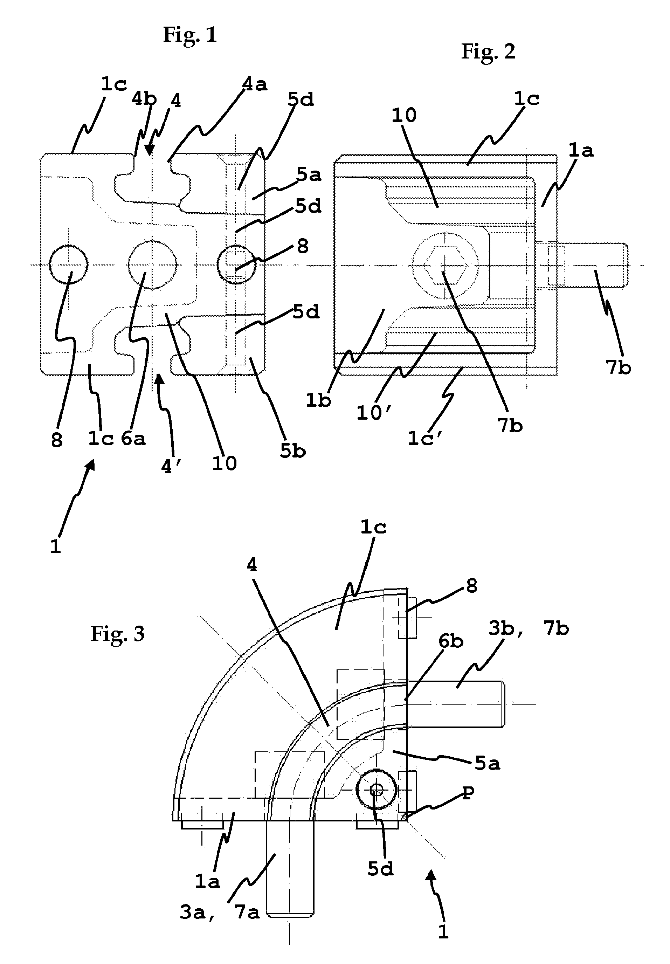

As illustrated in figures 1 to 5, the invention generally relates to a connection element 1 intended to perpendicularly join two metal profiles 2a, 2b provided with sliding and fastening grooves 2c, 2d.

In general, these profiles are used to mount structures, for example intended for assembly lines or to support installations.

The fastening between the two profiles 2a, 2b is performed by fastening means 3a, 3b disposed on two surfaces which are perpendicular to each other 1a, 1b of the element 1, which in general consist of two screws which are accessible through the opposite side of the surface, which cooperate with two fastening orifices.

Specifically, the invention essentially consists in the element 1 comprising at lest one circular groove 4 on the side of the perpendicular piece 1c on both surfaces perpendicular to each other 1a, 1b, the centre of the circular groove 4 being at the axis of intersection P of the surfaces perpendicular to each other 1a, 1b.

With this disposition, the connection element 1 guarantees, by means of the circular groove 4 on the side 1c, the continuity between the sliding and fastening grooves 2c, 2d of the two profiles to be fastened 2a, 2b.

Additionally, the geometric characteristics permit the union to be carried out by occupying the same space possible, by aligning two edges of the profiles to be connected.

In general, the section of the profile grooves tends to widen within the profile itself, so that retaining edges which lead to grooves or retaining rails are configured.

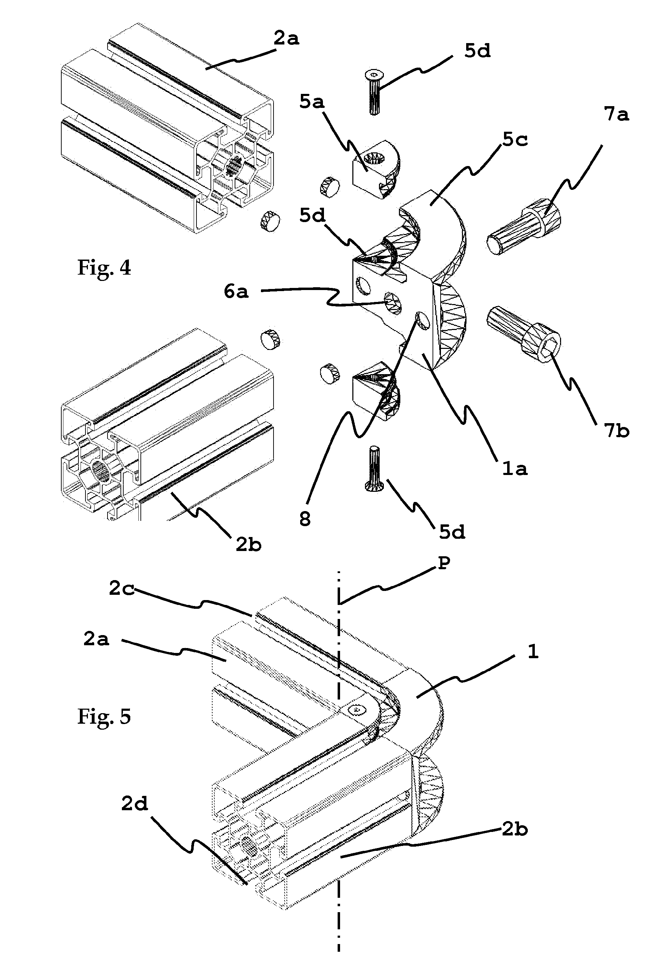

Therefore, to ensure the continuity of the profile groove provided from these types of grooves, it is planned, according to an especially preferred embodiment, that the circular groove 4 has a section that widens in the direction of the entrance, as observed in figures 1 and 4. In this manner, the profile itself can serve as a fastening area for other elements.

According to another form of preferred embodiment of the invention, the connection element 1 comprises another groove 4' on the opposite side 1'c to that which contains the first groove, so that the continuity of the grooves on both sides of the two profiles to be joined 2a, 2b is guaranteed.

The element of the invention, due to the specific configuration thereof, it must be manufactured with a lost wax mould if one wishes to make it from a single piece, which is especially burdensome.

For this reason, according to another variant of embodiment, it is provided that the edges and internal surfaces 4a, 4b of said circular grooves 4 closest to the axis of intersection P form part of two pieces 5a, 5b which can be assembled with suitable connection means 5d, with a third piece 5c which constitutes the rest of the element 1, thereby being able to manufacture the element from three pieces, which can be produced by moulding, and especially without featuring unmoulding problems.

These means 5d can be materialised by means of two mutually threadable screws with longitudinal shafts parallel to said axis of intersection P.

Obviously, it must be provided that there are three coaxial orifices on the three pieces when the array is assembled.

With respect to the third piece 5c, which constitutes the main part of the element 1, this formed by two plates 1a, 1b which constitute the perpendicular surfaces, joined at the axis of intersection P and by a revolution surface which joins the plates, leaving the centres of the plates 1a, 1b free for the disposition of orifices 6a, 6b, intended to allow the fastening screws 7a, 7b pass through to the profiles 2a, 2b, as observed in figure 5.

In can further be provided in the aforementioned plates 1a, 1b and on both sides of the orifices and for their part intended to come into contact with the profiles 2a, 2b, holding projections or additional fastening orifices 8, intended to prevent rotation between the connection element 1 and the profiles 2a, 2b.

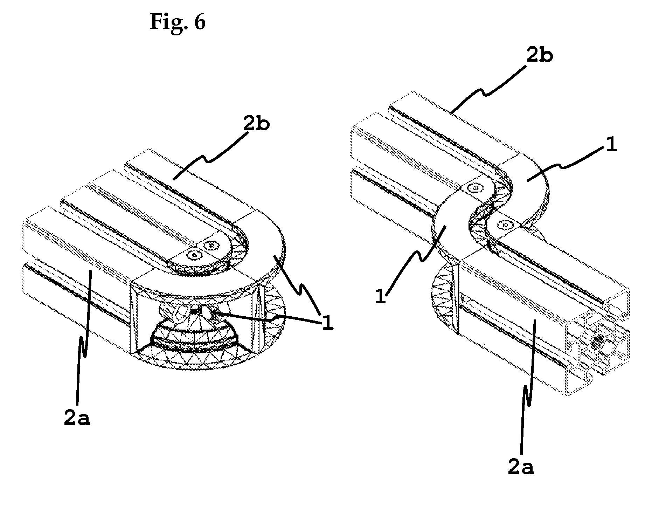

Finally, as observed in figure 6, the combination of different pieces according to the invention permits the production of 180° angles, or movement of the axis of the profile, but always maintaining the continuity of the groove.

## Claims

1. Connection element (1) intended to perpendicularly join two metal profiles (2a, 2b) provided with sliding and fastening grooves (2c, 2d), which comprises fastening means (3a, 3b) to said profiles (2a, 2b) on two surfaces perpendicular to each other (1a, 1b) of said element (1), **characterised in that** it comprises at least one circular groove (4) on one side of the piece (1c) perpendicular to said surfaces perpendicular to each other (1a, 1b), the centre of said circular groove (4) pertaining to the axis of intersection (P) of said surfaces which are perpendicular to each other (1a, 1b), so that said connection element (1) guarantees, by means of the circular groove (4) on the side (1c), the continuity between the sliding and fastening grooves (2c, 2d) of the two profiles to be fastened (2a, 2b).

2. Connection element (1) according to the previous claim, wherein the circular groove (4) has a section which becomes wider in the direction of the entrance, so that the edges (4a, 4b) of the groove (4) constitute two fastening and retaining flaps.

3. Connection element (1) according to either of the previous claims, which comprises another groove (4') on the side opposite (1'c) to the one which contains the first groove, so that it can guarantee the continuity of the grooves of both sides of the profiles to be joined (2a, 2b).

4. Connection element (1) according to the previous claim, wherein the edges and internal surfaces (4a) of said circular grooves (4) closest to the axis of intersection (P) pertain to both pieces (5a, 5b), which can be assembled with a third piece (5c) which makes up of the rest of the element (1).

5. Connection element (1) according to the previous claim, which comprises connection means (5d) of said pieces (5a, 5b) to said third piece (5c).

6. Connection element (1) according to the previous claim, wherein said connection means (5d) comprises two mutually threadable screws with longitudinal shafts parallel to said axis of intersection (P), three aligned orifices being provided in said three pieces, arranged between both shafts when the array is assembled.

7. Connection element (1) according to any of the previous claims, wherein the third piece (5c), which constitutes the main part of the element (1), is formed by two plates (1a, 1b) which constitute said perpendicular surfaces, joined at the axis of intersection (P) and by a surface of revolution (10, 10') which connects to said plates, leaving the centres of the plates (1a, 1b) free for the disposition of both orifices (6a, 6b), intended to allow fastening screws (7a, 7b) to pass through to said profiles (2a, 2b).

8. Connection element (1) according to the previous claim, wherein the plates (1a, 1b) can be provided, on both sides of said orifices, and on the other hand intended to come into contact with the profiles (2a, 2b), with holding projections or additional fastening orifices (8), intended to prevent the rotation between the connection element (1) and the joined element (2a, 2b).

9. Connection system of metal profiles (2a, 2b) provided with sliding and fastening groves, wherein connection elements (1) according to any of the previous claims are used.
